# EUROPEAN PATENT APPLICATION

(11) **EP 1 679 916 A1**
(43) Date of publication of application: **12.07.2006**
(21) Application number: 06000145.0
(22) Date of filing: 04.01.2006
(51) Int. Cl.: H04Q 7/32, H04M 1/725

(54) **Method for limiting a data storage function in a mobile communication terminal**

(30) Priority: 05.01.2005 KR 2005000813
(71) Applicant: Samsung Electronics Co., Ltd., Suwon-si, Gyeonggi-Do (KR)
(72) Inventor: Oh, Hyuk, Yeongtong-gu, Suwon-si, Gyeonggi-do (KR)
(74) Representative: Grünecker, Kinkeldey, Stockmair & Schwanhäusser Anwaltssozietät

(57) **Abstract**

A method for limiting a data storage function in a mobile communication terminal. When entering an area (such as a secure area) where the data storage function is limited, the mobile communication terminal receives, from a base station located in a secure area, a message indicating that the mobile communication terminal is currently located in the secure area. The mobile communication terminal then analyzes the received message, determines whether it is currently located in the secure area, and sets and stores file system control information such that data generated when a supplementary function is performed cannot be stored. Even when a user who fails to determine that he or she is in the secure area uses the supplementary function of the terminal, the data is not actually stored, such that security can be maintained in a specific area.

## Description

The present invention relates to a mobile communication terminal, and more particularly to a method for limiting a data storage function of the mobile communication terminal in an area where security is required.

Recently, mobile communication terminals such as personal digital assistants (PDAs) capable of processing various functions have become commonplace. Mobile communication terminals can perform functions in a manner similar to personal computers. More specifically, businesses distributing mobile contents such as ring tones, character pictures, and so on are increasingly growing. As such, a wireless content business is rapidly growing. Accordingly, an ever increasing amount of files can be created and transmitted/received wirelessly.

With the development of various types of mobile communication terminals, multifunctional mobile communication terminals including built-in cameras, capable of performing photographic and/or video functions as well as voice communication functions have been developed. Users of these devices can conveniently take a still or a moving picture anytime and almost anywhere using a mobile communication terminal with a built-in camera. Because mobile communication terminals with built-in cameras are portable users can conveniently take a picture of an emergency scene or anytime as desired. In spite of these advantages, however, the terminal with the camera function can have disadvantages which will be described below.

Along with the advent of the current information age, the importance of information security is growing. Information security is also highly desirable in corporate environments where multifunctional mobile communication terminals capable of performing camera functions may be used in a secure area of a corporation, which may compromise corporate security. Moreover, mobile communication terminal can be concealed and used as a concealed camera. For example, the mobile communication terminal with a built-in camera may be used to take a picture in a public place, such as a sauna or restroom, which may violate an individual's right to privacy. Also, confidential data (such as corporate trade secrets and or military secrets) can be copied and leaked using a mobile communication terminal's built-in camera. Such leaks may compromise national security and/or lead to corporate espionage. Furthermore, users of mobile communication terminals may inadvertently photograph secret, secure and/or restricted areas, military facilities, corporate facilities and/or research institutions, and may unintentionally distribute this information..

To make matters worse, data can be transferred from a mobile communication terminal to a movable storage medium mounted in the terminal. That is, the current mobile communication terminals can have multiple functions including a disc storage functions and auxiliary memory functions using, for example, multimedia cards (MMCs), a secure digital (SD) cards, smart media (SM) cards, compact flash (CF) cards, xD cards, and memory stick (MS) cards. Accordingly, because data can be stored using movable disc storage functions and auxiliary memory functions of the mobile communication terminals, conventional methods for limiting the capture and dissemination of photographs and videos is inadequate.

Further, NAND (not and) flash memories can be used as storage mediums for mobile communication terminals. In addition to the NAND flash memory, various storage mediums include auxiliary memory cards and external hard drive. Accordingly, a need exists for a method capable of maintaining security by limiting the data storage function in mobile communication terminals (e.g., NAND flash memories) for all storage media.

Even though some functions such as a still or moving picture taking function, etc. of the multifunctional mobile communication terminal can be controlled, conventional methods for controlling may not prevent important data from escaping a secure area when the data is stored using various storage medium. For example, when a person directly accesses important data stored in a personal computer located in a secure area and downloads (or otherwise stores) the confidential data to the mobile communication terminal, the misappropriated data can only be found by searching the mobile communication terminal's memory. Accordingly, absent a full search of a mobile communication terminal's memories, misappropriated data can be easily removed from secure areas regardless of security and control in the secure area.

Accordingly, the present invention has been designed to solve the above and other disadvantages of the prior art. Therefore, it is an aspect of the present invention to provide a method for limiting a data storage function of a mobile communication terminal to prevent data from being saved by interrupting an operation for storing data generated using a supplementary function, without controlling the supplementary function of the terminal whose use is limited in a secure area.

The above and other aspects can be achieved by a method for limiting a data storage function of a mobile communication terminal in a mobile communication system. The method includes generating, from a base station, a message including information for controlling the data storage function of the mobile communication terminal when the mobile communication terminal enters an area where the data storage function is limited, the area being covered by the base station, and sending the message to all mobile communication terminals located in the area, and setting a data storage limiting mode.

The above and other aspects can also be achieved by a method for limiting a data storage function of a mobile communication terminal. The method includes receiving, from a base station, a message including information for controlling the data storage function of the mobile communication terminal when the mobile communication terminal enters an area where the data storage function is limited, and analyzing the received message and setting a data storage limiting mode for preventing data from being stored by setting file system control information when the analyzed message indicates an area where the data storage function is limited.

The above and other aspects and advantages of the present invention will be more clearly understood from the following detailed description taken in conjunction with the accompanying drawings, in which:
FIG. 1 is a block diagram illustrating a mobile communication system according to an embodiment of the present invention;
FIG. 2 is a diagram illustrating an internal structure of a mobile communication terminal that performs a data storage limiting function according to an embodiment of the present invention;
FIG. 3 is a diagram illustrating file system control information for limiting a data storage function an embodiment of the present invention;
FIG. 4 is a flow diagram illustrating message transmission/reception between a base station and a mobile communication terminal according to an embodiment of the present invention;
FIG. 5 is a flow chart illustrating a control operation in a mobile communication terminal performed when entering a secure area according to an embodiment of the present invention; and
FIG. 6 is a flow chart illustrating a control operation in a mobile communication terminal for limiting the data storage function according to an embodiment of the present invention.

Preferred embodiments of the present invention will be described in detail herein below with reference to the accompanying drawings. In the following description, a detailed description of known functions and configurations incorporated herein will be omitted for conciseness.

The present invention provides a function for limiting a data storage function in a mobile communication terminal. In accordance with the present invention, when entering a secure area, the mobile communication terminal receives, from a base station located in a secure area, a message informing the mobile communication terminal that it is currently located in a secure area where a data storage function is limited. The mobile communication terminal then analyzes the received message, determines that it is currently located in the secure area, and sets and stores file system control information such that data generated when a supplementary function is performed cannot be stored. Even when a user, who is unaware of being located in a secure area, uses the supplementary function of the mobile communication terminal, data generated when the supplemental function is performed is not stored, such that security can be maintained in a secure area.

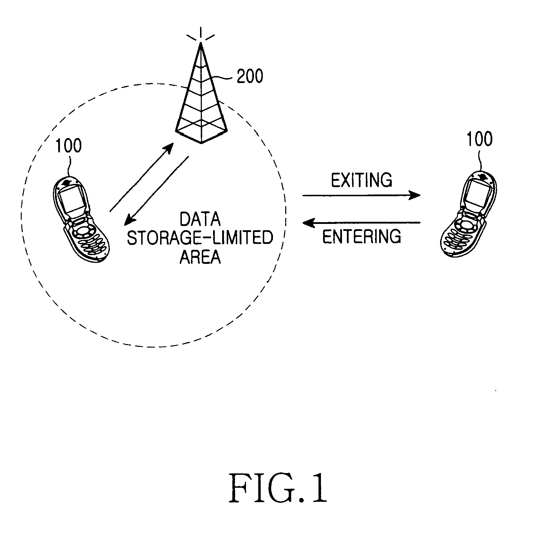

An operation for limiting a data storage function between a base station and the mobile communication terminal in an area where the data storage function needs to be limited in accordance with an embodiment of the present invention will be described with reference to FIG. 1, which is a block diagram illustrating a mobile communication system according to an embodiment of the present invention. In this embodiment of the present invention, a mobile communication service is provided for both public and private use. It is preferred that a shared cell for public/private use be defined such that a specific group may conveniently use the communication service. This public/private cell serving as a communication service area shared for public and private use includes a public/private communication service device. It is assumed that the public/private communication service device is coupled to a corresponding service through a base station.

As illustrated in FIG. 1, a base station 200 covers one cell representing a predetermined area, and a mobile communication terminal 100 is located in the cell. For example, if a specific company uses a building, an area corresponding to the confines of the building can be set to a cell.

When entering an area where the data storage function needs to be limited, (i.e., a secure area), the mobile communication terminal 100 determines that it is in the secure area through a system parameter message received from the base station 200, and sends a location registration request message to the base station 200. The location registration request message may include information indicating that the terminal 100 has a supplementary function whose use is limited in the secure area. Upon receiving the location registration request message from the terminal 100, the base station 200 sends, to the mobile communication terminal 100, a response message including a code for limiting the data storage generated when performing the supplementary function whose use is limited in the secure area. Accordingly, the mobile communication terminal 100 can determine whether the data storage limiting mode is set, through the response message received from the base station 200.

However, when exiting the secure area, the mobile communication terminal 100 receives a message for releasing the limited data storage function, and normally performs the data storage function outside the secure area. In other words, when exiting the secure area, the mobile communication terminal 100 sends a location registration request message to another base station different from the base station 200 of the current cell. In this case, the terminal 100 receives a response message indicating that it is located outside a secure area, and then releases the limited data storage function.

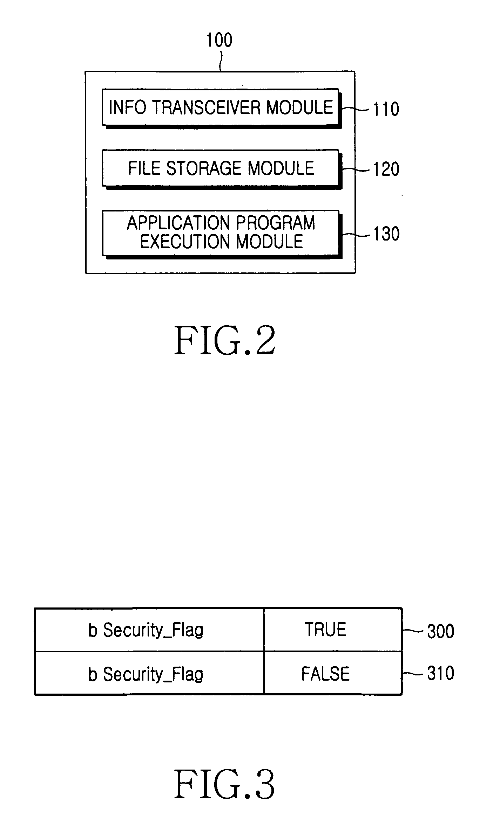

Now, roles of respective components in the mobile communication terminal 100 for performing the data storage limiting function in the secure area will be described. An internal structure of the mobile communication terminal 100 for performing the data storage limiting function according to an embodiment of the present invention will be described with reference to FIG. 2.

As illustrated in FIG. 2, the mobile communication terminal 100 of the present invention includes an information transceiver module 110, a file storage module 120, and an application program execution module 130.

Conventionally, when external data is input to the information transceiver module 110, the information transceiver module 110 transfers the input data to the application program execution module 130. The information transceiver module 110 converts a signal including voice data, etc. into a radio frequency (RF) signal, and then transmits the converted signal to a base station through an antenna (not shown). Moreover, the information transceiver module 110 receives an RF signal from the base station, converts the received RF signal into an intermediate frequency (IF) signal, and outputs the IF signal to the application program execution module 130. More specifically, the information transceiver module 110 in accordance with the present invention is coupled to the base station 200 for providing a mobile communication service for public and private use, and receives location information, requested by the user, indicating if it is currently located in a secure area.

The file storage module 120 stores various user data files. The file storage module 120 receives a file control command from the application program execution module 130 according to information received by the information transceiver module 110. The file storage module 120 retrieves a file to be managed and outputs a result of the retrieval. The file storage module 120 is a memory mounted in the mobile communication terminal 100. The file storage module 120 may include memories such as a flash memory, an auxiliary memory card (such as a multimedia card (MMC), a secure digital (SD) card, a smart media (SM) card, a compact flash (CF) card, an xD card, or a memory stick (MS) card), a movable disc, an external hard drive, and so on.

The application program execution module 130 stores various application programs capable of executing user data files stored in the file storage module 120. Moreover, the application program execution module 130 is coupled to an application program capable of executing a file output from the file storage module 120, and then executes a file managed by file control information. The file control information includes information indicating whether the data storage limiting function is set according to the information, received from the base station 200 which indicates whether the terminal 100 is currently located in a secure area. More specifically, the file control information generated to manage a file includes a specific file name, a file storage path, and a file open, read, write, edit, store, move, transfer, share, upload, or download command.

Conventionally, storage mediums utilize a file system for storage of data. Accordingly, the application program execution module 130 in accordance with an embodiment of the present invention also uses a file system to store a file in the file storage module 120.

To read a file using the file system, the application program execution module 130 executes the file in the order in which it opens a corresponding file, reads content of the file, and closes the file. File control commands for executing the file are "fopen( )", "fread( )", and "fclose( )". However, when storing a file, file control commands are performed in order of "fopen( )", "fwrite( )", and "fclose( )". That is, the file control command of "fopen( )" is a command for generating a file, and "fwrite( )" is a command for storing data in the file. This process ends through the file control command of "fclose( )".

In an embodiment of the present invention, when the mobile communication terminal 100 enters a secure area, a limiting function is set through communication with the base station 200, which does not operate the data storage function of the mobile communication terminal 100 in the secure area. Setup of the data storage limiting function is determined by an arbitrary parameter for limiting the data storage function in the secure area.

FIG. 3 illustrates file system control information for limiting the data storage function according to an embodiment of the present invention. As indicated by reference numeral 300, when the mobile communication terminal 100 is in a secure area, "bSecurity_Flag" serving as the arbitrary parameter for limiting the data storage function is set to TRUE, i.e., a flag value is set to 1. As indicated by reference numeral 310 of FIG. 3, when the mobile communication terminal 100 is not in a secure area, "bSecurity_Flag" is FALSE, i.e., a flag value is set to 0.

When the file control command of "fwrite( )" is executed, a file having an arbitrary return value of 0 in "fwrite( )" is generated. In this case, an actually generated file is an empty file with the data length of 0. Even when the empty file is generated, a file write operation is normally executed. Accordingly, the application program execution module 130 can normally execute a file without an error. The file write operation is performed normally according to a function for storing confidential data (such as a still or moving picturewhich can include corporate secrets photographed in a secure area), but the confidential data is never stored. Accordingly, confidential data can be prevented from being leaked to unauthorized parties.

More specifically, when storing data using the file system, the application program execution module 130 first identifies a flag value set in the file control information including the parameter of "bSecurity_Flag" indicating whether the data storage function must be limited. That is, if the flag value is TRUE, a return operation is performed such that data cannot be stored. However, if the flag value is FALSE, the data storage function is performed normally. The application program execution module 130 generates an empty file or performs a normal file storage function according to the flag value.

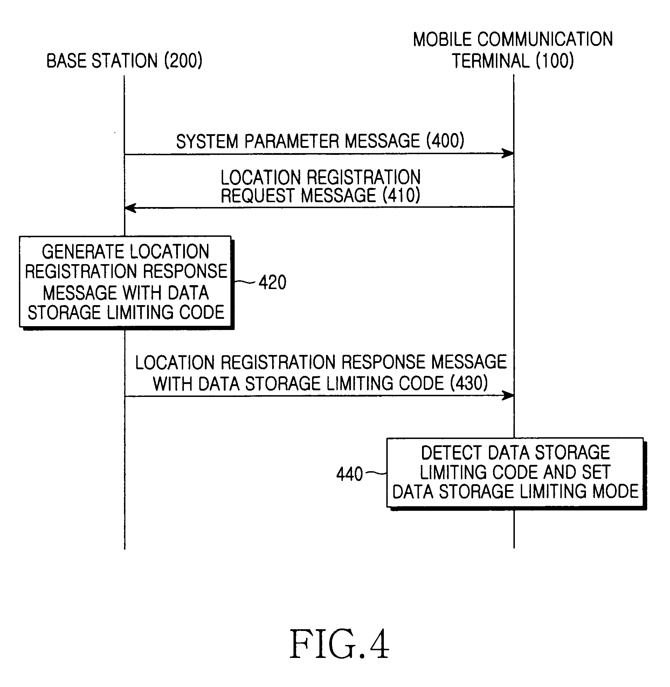

FIG. 4 is a flow diagram illustrating message transmission/reception between a base station and a mobile communication terminal according to an embodiment of the present invention. A message flow for the limiting the data storage function in the secure area through communication between the above-described mobile communication terminal 100 and the base station 200 will now be described.

As illustrated in FIG. 4, when entering a corresponding cell which is set as a secure area, the mobile communication terminal 100 receives a system parameter message from the base station 200 in step 400. The mobile communication terminal 100 determines that it is currently located in a private network mobile communication area, using the received system parameter message, and sends a location registration request message to the base station 200 in step 410. The location registration request message can include information indicating that the mobile communication terminal 100 has supplementary functions limited in use, for example, a picture taking function, etc. In step 420, the base station 200 generates a response message including a code for limiting data storage when a supplementary function limited in use in the mobile communication terminal 100 is used. The base station 200 then sends a location registration response message including a data storage limiting code to the mobile communication terminal 100 in step 430. Then, the mobile communication terminal 100 detects the data storage limiting code, and sets a current mode to the data storage limiting mode, if the detected limiting code is present, in step 440. The data storage limiting mode is a mode in which data can not to be stored even when the user inputs a data storage request, in which case, only an empty file with a data size of 0 will be guaranteed. That is, even when data is generated according to the use of a supplementary function, the generated data is not actually stored in the data storage limiting mode.

As described above, the mobile communication terminal 100 sends, to the public/private communication service system, e.g., a corresponding base station, a location registration request including information about a supplementary function in the terminal whose use is limited, analyzes a response message received from the base station, and sets the current mode to the data storage limiting mode in accordance with an embodiment of the present invention.

In accordance with another embodiment of the present invention, the base station 200 sends, to all mobile communication terminals 100 located within a corresponding cell, information indicating that the current cell is a secure area. The base station 200 can broadcast a message indicating that a data storage function is limited. Accordingly, the base station 200 sets information about an area where it is desired that a data storage function be limited, in the message to be broadcast, and then broadcasts the message through communication with all mobile communication terminals within the base station 200 cell at predetermined intervals. Because the base station 200 can notify the mobile communication terminal 100 of the fact that the mobile communication terminal 100 is currently located in a secure area by various methods as described above, it is preferred that the present invention is not limited to any one method.

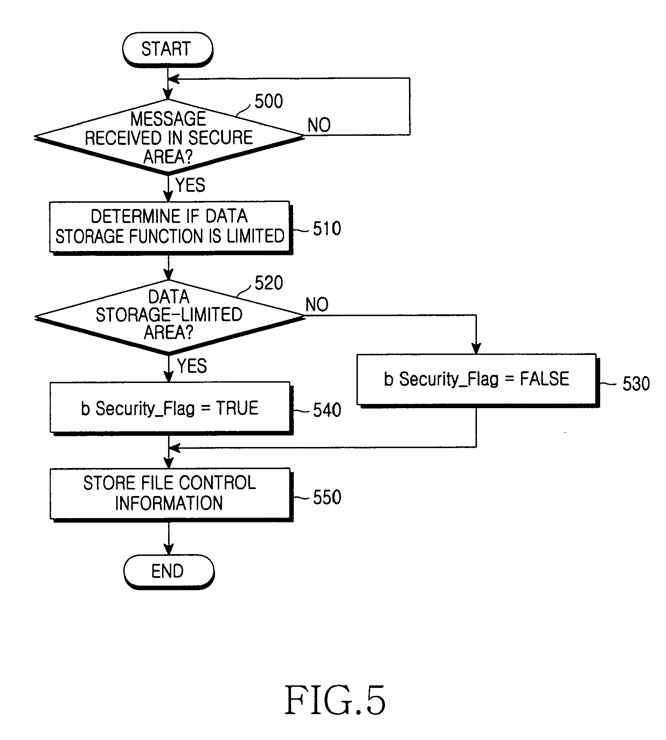

Now, a description will be given of a case where the mobile communication terminal 100 receives a message broadcast from the base station 200 covering a cell corresponding to a secure area. A control flow in a mobile communication terminal when entering the secure area in accordance with an embodiment of the present invention will be described with reference to FIG. 5 which is a flow chart illustrating a control operation in a mobile communication terminal performed when entering a secure area according to an embodiment of the present invention.

As illustrated in FIG. 5, the mobile communication terminal 100, when entering the secure area in step 500 determines whether a message has been received from the base station 200. If a message from the base station 200 has been received, the terminal 100 determines whether information about a limited data storage function is included in the received message in step 510. For example, the base station 200 notifies the mobile communication terminal 100 that the current cell is the secure area, and includes a code indicating that the data storage function is limited, in the message. Accordingly, the mobile communication terminal 100 determines whether a limiting code for limiting the data storage function has been set in the received message. As a result of the determination the mobile communication terminal 100 determines whether the current cell is an area where the data storage function is limited by identifying that the retrieved message includes information, such as the limiting code, indicating that the data storage function is limited in step 520.

If the current cell is the secure area where the data storage function is limited, the mobile communication terminal 100 sets, to TRUE, "bSecurity_Flag" serving as a data storage limiting parameter in step 540. However, if the current cell is not an area where the data storage function is limited in step 520, the terminal 100 proceeds to step 530. The mobile communication terminal 100 sets the parameter "bSecurity_Flag" to FALSE such that the data storage function can be performed normally in step 530. The terminal 100 stores file system control information including a flag value set to the data storage limiting parameter in step 550. As such, when the mobile communication terminal 100 identifies that it has entered a secure area, the mobile communication terminal 100 internally sets the flag value of the "bSecurity_Flag" parameter to TRUE.

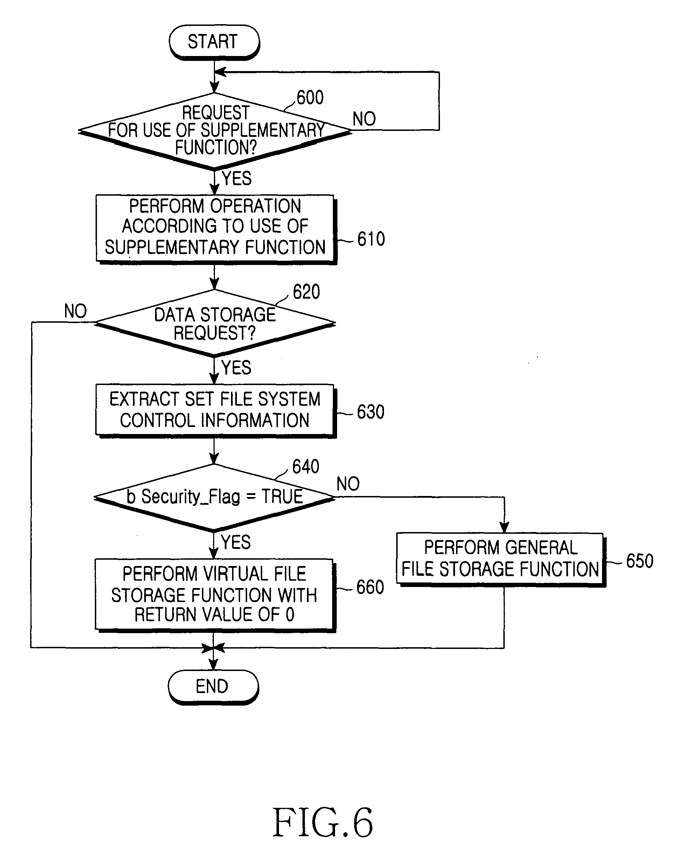

Next, an example to which the present invention is applied will be described in detail with reference to FIG. 6, which is a flow chart illustrating a control operation in the mobile communication terminal for limiting the data storage function according to an embodiment of the present invention.

Referring to FIG. 6, the mobile communication terminal 100 determines whether a user's request for use of a supplementary function is present in step 600. Here, the supplementary function is a function capable of being limited in use in the mobile communication terminal 100 in a secure area. Some functions of the mobile communication terminal 100 may need to be controlled in a secure area. For example, a terminal capable of implementing a camera function needs to control the storage of data generated when taking a picture. A personal digital assistant (PDA) terminal needs to control a function for downloading and storing a large amount of data. Accordingly, the supplementary function is a function capable of storing data generated when taking a picture in a terminal with a camera function. In addition, the supplementary function of a mobile communication terminal can download and store a large amount of data. Accordingly, it is preferred that all the functions that need to be controlled for data storage in a secure area are included in the supplementary function.

If it is determined that a user's request for use of a supplementary function such as a picture taking function, a data download function, etc. is present in step 600, the terminal 100 performs an operation according to the use of the supplementary function in step 610. That is, if the supplementary function is a picture taking function, the mobile communication terminal 100 conventionally operates a camera according to the picture taking function and performs a corresponding function such that a picture can be captured. Then, in step 620, the terminal 100 determines whether there is a request for storing data generated by the supplementary function, for example, a storage key input or a storage menu selection, etc. If it is determined that a storage request is present in step 620, the terminal 100 proceeds to step 630. In step 630, the mobile communication terminal 100 extracts preset file system control information. In this case, the file system control information includes a flag value of a "bSecurity_Flag" parameter indicating if the data storage function is limited.

After the mobile communication terminal 100 extracts the file system control information, it proceeds to step 640 wherein the mobile communication terminal 100 determines whether a flag value set to "bSecurity_Flag" is TRUE using the extracted file system control information. If it is determined that "bSecurity_Flag" serving as the data storage limiting parameter is not TRUE, i.e., FALSE, the terminal 100 proceeds to step 650. In step 650, the mobile communication terminal 100 performs a general file storage function for storing a file with the same size as that of data generated by the use of the supplementary function. However, (in step 640) if the flag value set to "bSecurity_Flag" is TRUE, the terminal proceeds to step 660. In step 660, the mobile communication terminal 100 performs a virtual file storage function with a return value of 0 such that data cannot be stored. In accordance with the present invention, when the file storage function is performed, an empty file in which data is not actually stored or a file in which data is normally stored is generated according to the flag value set to "bSecurity_Flag" serving as the data storage limiting parameter.

As described above, the terminal 100 first identifies the flag value using the file system when storing data. That is, if the flag value is TRUE, the mobile communication terminal 100 generates the empty file in which data is not actually stored. such that data cannot be stored. If the flag value is FALSE, the terminal normally performs the data storage function. A file control command for writing a file according to the file control information can be coded as described in Example 1.

### Example 1

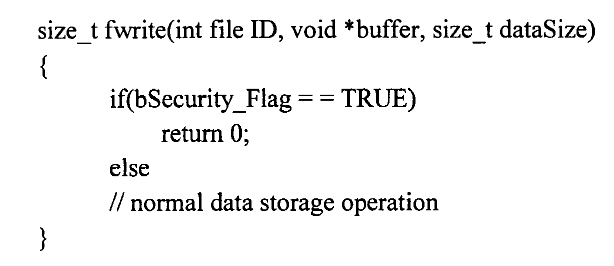

As described in the coded file control command of 'fwrite( )" of Example 1, the return value is 0 when the flag value of "bSecurity_Flag" is set to TRUE in a secure area. Accordingly, data is not actually stored, and thus an empty file is generated. The method for implementing the data storage limiting function in the mobile communication terminal as described above can be achieved by changing only a part of existing software of mobile communication terminals. That is, the data storage limiting function can be controlled simply through an upgrade of an application program setup module. Accordingly, even though any multifunctional mobile communication terminal performs a supplementary function whose use is limited in a secure area in response to a user request, data cannot actually be stored and thus security can be enhanced.

As is apparent from the above description, the present invention can solve a disadvantage of existing mobile terminals in which is difficult to maintainsecurity using conventional methods such as, simply limiting a camera picture taking function, or intensifying a security search for each of various storage media, etc. in a secure area. That is, the present invention can maintain security by limiting a data storage function using file system software. In accordance with the present invention, when a request for the data storage function is present in the secure area, the data storage function is not forcibly terminated, but instead a file is generated as an empty file, which requires only slight software modifications in order to be implemented.

## Claims

1. A method for limiting a data storage function of a mobile communication terminal in a mobile communication system, comprising the steps of:
generating, by a base station, a message including information for controlling the data storage function of the mobile communication terminal when the mobile communication terminal enters an area, covered by the base station, where the data storage function is limited;
transmitting, by the base station, the message to mobile communication terminals located in the area; and setting a data storage limiting mode in the mobile communication terminal.

2. The method according to claim 1, wherein setting the data storage limiting mode comprises the steps of:
analyzing the message in the mobile communication terminal; and
setting the data storage limiting mode by setting a flag value for limiting the data storage function, if the message indicates that the terminal is currently located in the area where the data storage function is limited.

3. The method according to claim 2, further comprising the steps of:
determining whether a user request for use of a supplementary function whose use is limited exists, after setting the data storage limiting mode;
determining whether a request for storing data generated according to the use of the supplementary function exists;
analyzing the flag value if the data storage request exists; and
generating an empty file if the flag value is set.

4. The method according to claim 3, wherein the supplementary function is controlled when a request to store data is made while the mobile communication terminal is in the area where the data storage function is limited.

5. A method for limiting a data storage function of a mobile communication terminal, comprising the steps of:
receiving, from a base station, a message including information for controlling the data storage function of the mobile communication terminal when the mobile communication terminal enters an area where the data storage function is limited; and
analyzing the received message and setting a data storage limiting mode for preventing data from being stored by setting file system control information when the analyzed message indicates the mobile communication terminal is in an area where the data storage function is limited.

6. The method according to claim 5, wherein the file system control information includes a flag value indicating that the data storage function is limited.

7. The method according to claim 6, further comprising the steps of:
determining whether a user request for a supplementary function whose use is limited exists while the mobile communication terminal is in the data storage limiting mode;
determining whether a request for storing data generated according to the use of the supplementary function exists;
extracting the file system control information, if the request for storing data exists; and
performing a function for storing a file according to the extracted file system control information.

8. The method according to claim 7, wherein when the flag value is set, the stored file is an empty file with a data size of 0.

9. The method according to claim 7, wherein when the flag value is not set , a file including the generated data is stored.

10. The method according to claim 7, wherein when the mobile terminal is located in an area where the data storage function is limited, the supplementary function is controlled when data is stored.

11. The method according to claim 10, wherein when the mobile communication terminal includes a camera function, the supplementary function is a function capable of generating data when capturing a picture and storing the generated data.

12. The method according to claim 11, wherein the supplementary function is one of a plurality of functions which can download a large amount of data and store the downloaded data in the mobile communication terminal.

13. The method according to claims 5 to 12, further comprising:
receiving, from another base station, a message including information for controlling the data storage function, when the mobile communication terminal exits the area where the data storage function is limited; and
analyzing the received message, and releasing the set data storage limiting mode, if the analyzed message includes information indicating an area where the data storage function is not limited.
